# EUROPÄISCHE PATENTSCHRIFT

(11) **EP 3 898 517 B1**
(45) Veröffentlichungstag und Bekanntmachung des Hinweises auf die Patenterteilung: **14.06.2023**
(21) Anmeldenummer: 19818083.8
(22) Anmeldetag: 16.12.2019
(51) Int. Cl.: C01D 15/08

(54) **HERSTELLUNG VON HOCHREINEM LITHIUMCARBONAT AUS SOLEN**
PRODUCTION OF LITHIUM CARBONATE FROM BRINE
PRODUCTION DE CARBONATE DE LITHIUM À PARTIR DE SAUMURE

(30) Priorität: 20.12.2018 EP 18214613
(43) Veröffentlichungstag der Anmeldung: 27.10.2021
(73) Patentinhaber: LANXESS Deutschland GmbH, 50569 Köln (DE)
(72) Erfinder: STEINHILBER, Dirk, 41470 Neuss (DE); NEUFEIND, Stefan, 53721 Siegburg (DE); TSUZUKI, Shintaro, 50999 Köln (DE); KRALIK, Joachim, 42799 Leichlingen (DE)
(86) Internationale Anmeldenummer: PCT/EP2019/085245
(87) Internationale Veröffentlichungsnummer: WO 2020/126974

(56) Entgegenhaltungen:
- EP-A1- 3 290 393
- US-A1- 2011 123 427
- US-A1- 2018 320 247
- DATABASE WPI Week 201728 Thomson Scientific, London, GB; AN 2017-04795B XP002789902, -& CN 106 276 988 A (UNIV QINGHAI) 4. Januar 2017 (2017-01-04)

## Beschreibung

Die Erfindung betrifft ein Verfahren zur Herstellung von hochreinem Lithiumcarbonat aus Solen.

Lithiumcarbonat stellt ein bedeutendes Material zur Herstellung von Lithiumionenbatterien dar. Lithiumionenbatterien werden als Energiespeicher in elektrischen Fahrzeugen, Mobilfunkgeräten und Netzspeichern genutzt. Zur Herstellung von Lithiumionenbatterien ist die Verwendung von hochreinem Lithium erforderlich, da Verunreinigung die Kapazität und Lebensdauer der Batterien verkürzen.

Lithium kann insbesondere aus Solen gewonnen werden, die durch Erdalkalimetalle, wie Magnesium und Calcium, aber auch durch Kalium, Chlorid, Bromid oder Borat, verunreinigt sein können.

Natürliche Solen stellen die Basis für 66% der weltweiten Lithiumreserven dar. Solche Solen enthalten jedoch im Allgemeinen nur sehr geringe Mengen an Lithium. Zum Beispiel enthält die Sole des Great Salt Lake in Utah nur etwa 34 bis 66 ppm Lithium. Andere natürliche Salzlösungen, wie etwa solche, die aus Minen oder anderen Quellen aus dem Grundwasser stammen, können bis zu 0,5 Gew.% Lithium enthalten. Solche konzentrierten Salzlösungen sind jedoch selten.

Daher ist die Herstellung von hochreinem Lithium aus Solen technisch und ökonomisch sehr aufwendig.

Traditionelle Techniken für die Herstellung von Lithiumcarbonat sehen vor, dass mit Hilfe der Sonneneinstrahlung zunächst das Wasser der Sole weiter eingedampft wird, dabei dann die Salzverunreinigungen, insbesondere Magnesiumhydroxid und Calciumhydroxid aussalzen und dann mittels Filtration abgetrennt werden. Dieses Verfahren ist extrem zeitaufwendig und daher kommerziell zur Deckung des steigenden Bedarfs an hochreinem Lithium nicht zufriedenstellend einsetzbar. Aus der US-B 4243392 ist bekannt, dass dieses Verfahren zur Herstellung von hochreinem Lithiumchlorid genutzt wird, aus dem dann zunächst Lithiumcarbonat und im weiteren Verfahren, elektrolytisch hochreines Lithium gewonnen werden kann.

Die US-B 4980136 beschreibt ein Verfahren zur Herstellung von Lithiumchlorid mit einem Reinheitsgrad von >99 % bei dem zunächst durch Verdunstung des Wasser aus der lithiumhaltigen Sole die Magnesiumverunreinigungen ausgefällt werden und dann das Lithium mittels Alkoholen, insbesondere mit Hilfe von Isopropanol, extrahiert wird. Das Lithiumchlorid kann dann mittels Kristallisation aus dem Alkoholgemisch in hoher Reinheit gewonnen werden. Nachteilig an diesem Verfahren sind die großen Dimensionen der Anlagen, die aus ökologischen und ökonomischen Gründen nur eingeschränkt sinnvoll sind.

Anorganische Ionenaustauscher werden zur Adsorption und Abtrennung von Lithiumionen genutzt. Aus der DE-A 19541558 ist z.B. die Reinigung von Lithiumchlorid-Lösungen, die durch lonenaustausch von Lithiumionen aus Solen mit Natrium-Zeolith-X entstehen, bekannt.

Die US-B 5599516 beschreibt die Verwendung von polykristallinen, hydratisierten Aluminiumzusammensetzung zur Gewinnung von hochreinem Lithium aus Solen.

Aus der US-B 4859343 und der US-B 4929588 ist die Verwendung von kristalliner Antimonsäure zur Entfernung von Verunreinigung, insbesondere von Magnesium-, Calcium und Natriumionen aus Solen bekannt, um hochreines Lithium zu gewinnen.

Die US-B 4381349 beschreibt die Verwendung von schwach basischen Anionenaustauschern, an denen Aluminiumhydroxid abgeschieden wurde, zur Rückgewinnung von Lithiumionen.

An den vorstehenden Verfahren ist nachteilig, dass die anorganischen Materialien eine geringe mechanische und chemische Stabilität besitzen und daher nur für wenige Adsorptionszyklen verwendet werden können. Daher ist auch ihre Verwendung in großtechnischen Prozessen ökologisch und ökonomisch benachteiligt.

Aus "The recovery of pure lithium chloride from "brines" containing higher contents of calcium chloride and magnesium chloride", Hydrometallurgy, 27 (1991), Seite 317 bis 325 ist die Adsorption von Lithiumionen an Iminodiessigsäureharzen und Aminomethylharzen bekannt. Dort werden diese Harze aber mit dem Ziel der Entfernung von Verunreinigungen aus Solen eingesetzt. Die Gewinnung von hochreinem Lithium durch Adsorption und Elution der an einem Iminodiessigsäureharz oder einem Aminomethylharz gebundenen Lithiumionen und deren Umsetzung zu Lithiumcarbonat wird nicht beschrieben.

Die DE-A 19809420 beschreibt ein Verfahren zur Herstellung von hochreinem Lithiumcarbonat bei dem ein Gemisch aus Lithiumcarbonat und Wasser zunächst mittels Kohlendioxidzugabe in Lithiumhydrogencarbonat überführt wird und dieses Gemisch dann durch ein Ionenaustauscher-Modul aus schwach- als auch starksauren Kationenaustauschern oder aus Aminoalkylenphosphonsäuregruppen oder Iminodiessigsäuregruppen enthaltende Chelatharzen geleitet wird, um damit Verunreinigungen zu entfernen und dann das Lithiumcarbonat ausgefällt und abgetrennt wird.

CN-A 106276988 beschreibt ein Verfahren zur Herstellung von Lithiumcarbonat bei dem zunächst durch einen alkalischen Fällungsschritt mittels Kaliumcarbonat und Kaliumhydroxid, Magnesiumhydroxid und Calciumcarbonat ausgefällt und abgetrennt werden und dann eine weitere Reinigung der lithiumhaltigen Lösung mit einem Kationenaustauscher vorgenommen wird. Das lithiumhaltige Eluat wird dann mittels Umsetzung mit einem Carbonat als Lithiumcarbonat ausgefällt.

Auch aus der US-A 2011/0123427 ist ein Verfahren zur Gewinnung von Lithiumcarbonat bekannt, bei dem eine konzentrierte Lithiumlösung mit verschiedene Fällungsmitteln behandelt wird und das entstehende Lithiumhydrogencarbonat in Gegenwart von Carbonat bei höheren Temperaturen als Lithiumcarbonat gefällt wird. Die Abtrennung von Erdalkalimetallionen kann noch zusätzlich durch die Verwendung eines iminodiessigsäuregruppenhaltigen Ionenaustauscher bzw. Chelatharzes.

Nachteilig an den bestehenden Verfahren ist weiterhin, dass sie technologisch aufwendig umzusetzen sind und damit unnötig hohe Ressourcen verschwendet werden und hohe Kosten verursachen, also ökonomisch nicht zufriedenstellend durchführbar sind.

Es bestand daher die Aufgabe ein Verfahren zur Herstellung von Lithiumcarbonat bereitzustellen, mit dem die Nachteile des Standes der Technik überwunden werden können.

Überraschend wurde ein Verfahren gefunden, bei dem speziell funktionalisierte Chelatharze eingesetzt werden, die nicht nur zur Entfernung von Magnesium-, Calcium- oder Natriumionen eingesetzt werden können, sondern auch Lithiumionen in hohen Mengen adsorbieren und dadurch Lithiumcarbonat in hoher Reinheit gewonnen werden kann.

Gegenstand der Erfindung ist daher ein Verfahren zur Herstellung von Lithiumcarbonat, dadurch gekennzeichnet, dass
in einem ersten Verfahrensschritt a.) aus einer Sole enthaltend mindestens Lithiumionen, Calcium- und Magnesiumionen, die Calcium- und Magnesiumionen durch Zugabe eines Fällungsmittels ausgefällt werden und dabei ein Überstand generiert wird und dann
in einem Verfahrensschritt b.) der Überstand aus a.) mit mindestens einem Chelatharz enthaltend funktionelle Gruppen des Strukturelements (I) 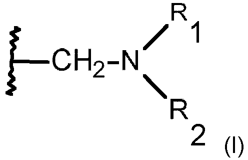
worin 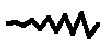 für das Polystyrolcopolymergerüst steht und R₁ und R₂ unabhängig voneinander für -CH₂COOX, -CH₂PO(OX¹)₂, -CH₂PO(OH)OX², -(CS)NH₂, -CH₂-Pyridyl oder Wasserstoff stehen, wobei R₁ und R₂ nicht beide gleichzeitig Wasserstoff sein können und X, X¹ und X² unabhängig voneinander für Wasserstoff, Natrium oder Kalium stehen, in Kontakt gebracht wird und
in einem Verfahrensschritt c.) der Durchlauf aus Verfahrensschritt b.) enthaltend Lithiumionen in einer Gewichtskonzentration von 1 ppm bis 500 ppm mit mindestens einem Chelatharz enthaltend funktionelle Gruppen des Strukturelements (I) und einer totalen Kapazität von 2.0 mol/L bis 3.5 mol/L 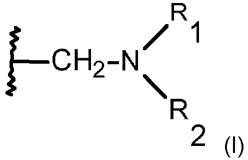
worin 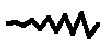 und R₁ und R₂ die in Verfahrensschritt b.) genannte Bedeutung haben in Kontakt gebracht wird und 30 % bis 96 % der totalen Kapazität des makroporösen, monodispersen Chelatharz enthaltend funktionelle Gruppen des Strukturelements (I) mit Lithium beladen werden und
in einem Verfahrensschritt d.) das in Verfahrensschritt c.) auf dem Chelatharz enthaltend funktionelle Gruppen des Strukturelements (I) adsorbierte Lithium durch Zugabe von anorganischen Säuren eluiert wird und gegebenenfalls das Eluat auf einen pH > 7 eingestellt und gegebenenfalls wieder in Verfahrensschritt c.) zurückgeführt wird und
in einem Verfahrensschritt e.) das lithiumhaltige Eluat aus Verfahrensschritt d.) mit mindestens einem Carbonat oder mit Kohlendioxid oder dessen Säure versetzt wird.

Mit Hilfe des erfindungsgemäßen Verfahrens wird Lithiumcarbonat vorzugsweise in einer Reinheit von mindestens 95 Gew.% bezogen auf das Gesamtgewicht des Lithiumcarbonats hergestellt. Besonders bevorzugt wird mit Hilfe des erfindungsgemäßen Verfahrens Lithiumcarbonat in einer Reinheit von mindestens 99 Gew.% bezogen auf das Gesamtgewicht des Lithiumcarbonats hergestellt. Ganz besonders bevorzugt wird mit Hilfe des erfindungsgemäßen Verfahrens Lithiumcarbonat in einer Reinheit von mindestens 99,5 Gew.% bezogen auf das Gesamtgewicht des Lithiumcarbonats hergestellt.

Lithiumhaltige Solen im Sinne der Erfindung sind wässrige Salzlösungen, die Lithiumionen enthalten. Vorzugsweise enthält die lithiumhaltige Sole Lithiumionen in einer Gewichtskonzentration von 0,1 ppm bis 5000 ppm. Besonders bevorzugt enthält die lithiumhaltige Sole Lithiumionen in einer Gewichtskonzentration von 0,1 ppm bis 1000 ppm.

In einer weiteren bevorzugten Ausführungsform der Erfindung enthält die lithiumhaltige Sole Lithiumionen in einer Gewichtskonzentration von 0,1 ppm bis 5000 ppm, Natriumionen in einer Gewichtskonzentration von 0,1 ppm bis 100 g/L und Calciumionen in einer Gewichtskonzentration von 0,1 ppm bis 100 g/L und Magnesiumionen in einer Gewichtskonzentration von 0,1 ppm bis 100 g/L.

In einer weiteren besonders bevorzugten Ausführungsform der Erfindung enthält die lithiumhaltige Sole Lithiumionen in einer Gewichtskonzentration von 0,1 ppm bis 1000 ppm Natriumionen in einer Gewichtskonzentration von 0,1 ppm bis 100 g/L und Calciumionen in einer Gewichtskonzentration von 0,1 ppm bis 100 g/L und Magnesiumionen in einer Gewichtskonzentration von 0,1 ppm bis 100 g/L.

In einer weiteren bevorzugten Ausführungsform der Erfindung enthält die lithiumhaltige Sole Strontiumionen in einer Gewichtskonzentration von 0,1 ppm bis 100 g/l.

In einer weiteren bevorzugten Ausführungsform werden 1 I bis 10 I lithiumhaltige Sole in Verfahrensschritt a.) eingesetzt.

Vorzugsweise wird in Verfahrensschritt a.) als Fällungsmittel zur Fällung der Calciumund Magnesiumionen, Metallsulfate, Metallhydrogensulfate, Metalloxalate, Metallhydroxide, Metallhydrogencarbonate, Metallcarbonate, Schwefelsäure, Oxalsäure, schwefelige Säure oder Kohlendioxid eingesetzt. Als Metalle können alle Metalle der Gruppen I A, II A, III B, IV B, V B, VI B, VII B, VIII B, I B, II B des Periodensystems und die Lanthanoiden eingesetzt werden. Besonders bevorzugt werden als Fällungsmittel Alkalimetalloxalate, wie insbesondere Natriumoxalat und Kaliumoxalat, Alkalimetallsulfate, wie insbesondere Natriumsulfat oder Kaliumsulfat, Alkalimetallcarbonate, wie insbesondere Natriumcarbonat und Kaliumcarbonat, Alkalimetallhydroxiden, wie insbesondere Natriumhydroxid und Kaliumhydroxid, Schwefelsäure, Oxalsäure, schwefelige Säure oder Kohlendioxid eingesetzt. Ganz besonders bevorzugt werden als Fällungsmittel in Verfahrensschritt a.) Natriumcarbonat, Natriumhydroxid und/oder Gemische dieser Verbindungen eingesetzt.

Die Fällung in Verfahrensschritt a.) kann bei Raumtemperatur erfolgen. Bevorzugt erfolgt die Fällung bei einer Temperatur von 40 °C bis 80 °C.

Bevorzugt beträgt das molare Verhältnis Fällungsmittel zu Calcium- und Magnesiumionen 5:1 bis 1:5, besonders bevorzugt 3:1 bis 1:1.

Der Überstand der in Verfahrensschritt a.) abgetrennt wird, enthält den wesentlichen Anteil an Lithiumionen. Der Überstand, der in Verfahrensschritt a.) abgetrennt wird, hat vorzugsweise einen pH Wert von 10 bis 12. Vorzugsweise wird die Fällung in Verfahrensschritt a.) in Gegenwart einer Base durchgeführt. Vorzugsweise weist das Fällungsmittel in Verfahrensschritt a.) bereits basische Eigenschaften auf, so das keine weitere Base zugesetzt werden muss. Falls die Fällung in Gegenwart einer Base durchgeführt wird, hat der Überstand vorzugsweise einen pH Wert von 10 bis 12. Falls keine Base als Fällungsmittel zugegeben wird, kann der Überstand durch Zugabe einer Base auf einen pH Wert von 10 bis 12 eingestellt werden. Als Basen zur Einstellung des pH Wertes des Überstandes oder als zusätzliche Base in Verfahrensschritt a.) werden vorzugsweise Alkalimetallhydroxide, wie insbesondere Natriumcarbonat, Natriumhydroxid und Kaliumhydroxid oder Gemische dieser Basen eingesetzt.

Durch den Fällungsschritt in Verfahrensschritt a.) wird die Gewichtskonzentration an Calcium- und Magnesiumionen vorzugsweise auf 10 ppm bis 100 ppm reduziert. In einer besonders bevorzugten Ausführungsform der Erfindung wird die Gewichtskonzentration an Calcium- und Magnesiumionen in Verfahrensschritt a.) auf 10 ppm bis 30 ppm reduziert.

In einer weiteren bevorzugten Ausführungsform der Erfindung wird der Strontiumionengehalt im Überstand in Verfahrensschritt a.) auf 10 ppm bis 100 ppm, besonders bevorzugt auf 1 bis 5 ppm reduziert.

In einer weiteren bevorzugten Ausführungsform der Erfindung beträgt das Verhältnis der Gewichtskonzentration der Lithiumionen, die in dem Überstand a.) enthalten sind und in Verfahrensschritt b.) eingesetzt werden zu den Gewichtskonzentrationen der Magnesium- und Calciumionen 100 : 1 bis 1 : 1, besonders bevorzugt 20 : 1 bis 5 : 1.

In einer weiteren bevorzugten Ausführungsform der Erfindung enthält der lithiumhaltige Überstand aus Verfahrensschritt a.) der in Verfahrensschritt b.) eingesetzt wird, Lithiumionen in einer Gewichtskonzentration von 0,1 ppm bis 500 ppm, Natriumionen in einer Gewichtskonzentration von 0,1 ppm bis 100 g/L und Calciumionen in einer Gewichtskonzentration von 1 ppm bis 100 ppm.

In einer weiteren bevorzugten Ausführungsform der Erfindung enthält der lithiumhaltige Überstand aus Verfahrensschritt a.) Lithiumionen in einer Gewichtskonzentration von 0,1 ppm bis 500 ppm, Natriumionen in einer Gewichtskonzentration von 0,1 ppm bis 100 g/L und Magnesiumionen in einer Gewichtskonzentration von 1 ppm bis 100 ppm.

In Verfahrensschritt b.) wird der Überstand aus Verfahrensschritt a.) auf mindestens ein Chelatharz enthaltend funktionelle Gruppen des Strukturelements (I) in Kontakt gebracht. Unter "in Kontakt gebracht" im Sinne der Erfindung wird vorzugsweise die Zugabe des Überstandes auf das in einer Säule befindliche Chelatharz enthaltend funktionelle Gruppen des Strukturelements (I) verstanden. Ebenso kann aber das Chelatharz enthaltend funktionelle Gruppen des Strukturelements (I) in den Überstand, im Rahmen eines Batchverfahrens, gegeben werden. Das Chelatharz wird vorzugsweise dann vom Überstand abfiltriert oder der Überstand wird abdekantiert. Der Überstand wird dann in Verfahrensschritt c.) überführt.

Bevorzugt sind R₁ und R₂ in dem in Verfahrensschritt b.) und/oder dem in Verfahrensschritt c.) eingesetztem Chelatharz enthaltend funktionelle Gruppen des Strukturelements (I) unabhängig voneinander = -CH₂PO(OX¹)₂, -CH₂PO(OH)OX², CH₂COOX oder Wasserstoff, wobei R₁ und R₂ nicht beide gleichzeitig Wasserstoff sein können und X, X¹ und X² stehen unabhängig voneinander für Wasserstoff, Natrium oder Kalium. Besonders bevorzugt ist R₁ = Wasserstoff, -CH₂PO(OX¹)₂ oder -CH₂PO(OH)OX² und R₂ = -CH₂PO(OX²)₂ oder -CH₂PO(OH)OX². Ganz besonders bevorzugt ist R₁ = Wasserstoff und R₂ = -CH₂PO(OX²)₂ oder -CH₂PO(OH)OX². X, X¹ und X² stehen unabhängig voneinander für Wasserstoff, Natrium oder Kalium. Bevorzugt stehen X, X¹ und X² unabhängig voneinander für Natrium. Bevorzugt sind X¹ und X² gleich.

Als Polystyrolcopolymere in dem Chelatharz enthaltend funktionelle Gruppen des Strukturelements (I) werden beispielsweise und vorzugsweise Copolymere aus Styrol, Vinyltoluol, Ethylstyrol, α-Methylstyrol, Chlorstyrol, oder Chlormethylstyrol und Mischungen dieser Monomere mit polyvinylaromatischen Verbindungen (Vernetzern), wie vorzugsweise Divinylbenzol, Divinyltoluol, Trivinylbenzol, Divinylnaphtalin oder Trivinylnaphtalin, eingesetzt.

Besonders bevorzugt wird als Polystyrol-Copolymergerüst ein Styrol/Divinylbenzol vernetztes Copolymer eingesetzt.

In dem Polystyrol-Copolymergerüst ist die -CH₂-NR₁R₂ -Gruppe an einem Phenylrest gebunden.

Bevorzugt weisen die erfindungsgemäß verwendeten Chelatharze enthaltend funktionelle Gruppen des Strukturelements (I) eine makroporöse Struktur auf.

Die Begriffe mikroporös oder gelförmig bzw. makroporös sind in der Fachliteratur bereits, beispielsweise in Seidl, Malinsky, Dusek, Heitz, Adv. Polymer Sci., 1967, Vol. 5, S. 113 bis 213, eingehend beschrieben worden. Dort werden ebenfalls die möglichen Messmethoden zur Makroporosität, z.B. Quecksilberporosimetrie und BET Bestimmung, beschrieben. Im Allgemeinen und vorzugsweise weisen die Poren der makroporösen Perlpolymerisate der erfindungsgemäß verwendeten Chelatharze enthaltend funktionelle Gruppen des Strukturelements (I) einen Durchmesser von 20 nm bis 100 nm auf.

Bevorzugt weisen die erfindungsgemäß verwendeten Chelatharze enthaltend funktionelle Gruppen des Strukturelements (I) eine monodisperse Verteilung auf.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von +/- 10 % des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Die Herstellung der in dem Verfahren eingesetzten Chelatharze enthaltend funktionelle Gruppen des Strukturelements (I) erfolgt bevorzugt dadurch, dass man:
1) Monomertröpfchen aus wenigstens einer monovinylaromatischen Verbindung und wenigstens einer polyvinylaromatischen Verbindung und wenigstens einem Initiator zu einem Perlpolymerisat umsetzt,
2) das Perlpolymerisat aus Schritt a) mit Phthalimidderivaten phthalimidomethyliert,
3) das phthalimidomethylierte Perlpolymerisat aus Schritt b) zu aminomethyliertem Perlpolymerisat umsetzt und gegebenenfalls in einem weiteren Schritt
4) das aminomethylierte Perlpolymerisat zu einem Chelatharz mit funktionellen Gruppen der Formel (I) funktionalisiert wird.

In Verfahrensschritt 1) wird wenigstens eine monovinylaromatische Verbindung und wenigstens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der vorliegenden Erfindung werden in Verfahrensschritt 1) bevorzugt Styrol, Vinyltoluol, Ethylstyrol, α-Methylstyrol, Chlorstyrol, oder Chlormethylstyrol eingesetzt.

Insbesondere bevorzugt wird Styrol oder Mischungen aus Styrol mit den vorgenannten Monomeren, bevorzugt mit Ethylstyrol, eingesetzt.

Bevorzugte polyvinylaromatische Verbindungen im Sinne der vorliegenden Erfindung sind für Verfahrensschritt 1) Divinylbenzol, Divinyltoluol, Trivinylbenzol, Divinylnaphtalin, oder Trivinylnaphtalin, insbesondere bevorzugt Divinylbenzol.

Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Perlpolymerisats ausgewählt. Im Falle des Einsatzes von Divinylbenzol sind kommerzielle Divinylbenzolqualitäten, die neben den Isomeren des Divinylbenzols auch Ethylvinylbenzol enthalten, ausreichend.

Der Begriff Perlpolymerisat stellt im Sinne der Erfindung ein kugelförmiges, vernetztes Polymerisat dar.

Die Ausbildung makroporöser Perlpolymerisate erfolgt vorzugsweise durch Zusatz von Inertmaterialien, bevorzugt wenigstens eines Porogens, zu der Monomermischung bei der Polymerisation, um im Perlpolymerisat eine makroporöse Struktur zu erzeugen. Insbesonders bevorzugte Porogene sind Hexan, Octan, Isooctan, Isododecan, Methylethylketon, Butanol oder Octanol und deren Isomeren. Es sind vor allem organische Substanzen geeignet, die sich im Monomeren lösen, das Perlpolymerisat aber schlecht lösen bzw. quellen (Fällmittel für Polymere) beispielsweise aliphatische Kohlenwasserstoffe (Farbenfabriken Bayer DBP 1045102 , 1957; DBP 1113570, 1957).

In US 4382124 werden als Porogen die ebenfalls im Rahmen der vorliegenden Erfindung bevorzugt einzusetzenden Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Bevorzugt wird in Verfahrensschritt 1) mindestens ein Porogen zugesetzt.

Die gemäß Verfahrensschritt 1) hergestellten Perlpolymerisate können in heterodisperser oder monodisperser Form hergestellt werden.

Die Herstellung heterodisperser Perlpolymerisate geschieht nach allgemeinen, dem Fachmann bekannten Verfahren, z.B. mit Hilfe der Suspensionspolymerisation.

Bevorzugt werden monodisperse Perlpolymerisate in Verfahrensschritt a) hergestellt.

In einer bevorzugten Ausführungsform der vorliegenden Erfindung kommen in Verfahrensschritt 1) mikroverkapselte Monomertröpfchen bei der Herstellung von monodispersen Perlpolymerisaten zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP 0 046 535 A eingehend beschrieben. Die Methoden der Verkapselung mit synthetischen Polymeren sind bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.

Die heterodispersen oder gegebenenfalls mikroverkapselten, monodispersen Monomertröpfchen enthalten wenigstens einen Initiator oder Mischungen von Initiatoren (Initiatorkombination) zur Auslösung der Polymerisation. Für das erfindungsgemäße Verfahren bevorzugte Initiatoren sind Peroxyverbindungen, insbesondere bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-etylhexan, sowie Azoverbindungen wie 2,2'-Azobis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Das gegebenenfalls, monodisperse, mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Bei der Herstellung von monodispersen Perlpolymerisaten in Verfahrensschritt 1) kann die wässrige Phase in einer weiteren bevorzugten Ausführungsform einen gelösten Polymerisationsinhibitor enthalten. Als Inhibitoren kommen in diesem Fall sowohl anorganische als auch organische Stoffe in Frage. Bevorzugte anorganische Inhibitoren sind Stickstoffverbindungen, insbesondere bevorzugt Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere bevorzugte organische Inhibitoren sind stickstoffhaltige Verbindungen. Insbesondere bevorzugt sind Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxyl-aminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls mikroverkapselten monodispersen, Monomertröpfchen zum monodispersen Perlpolymerisat erfolgt, gegebenenfalls bzw. bevorzugt in Anwesenheit eines oder mehrerer Schutzkolloide in der wässrigen Phase. Als Schutzkolloide eignen sich natürliche oder synthetische wasserlösliche Polymere, bevorzugt Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Bevorzugt sind ferner Cellulosederivate, insbesondere Celluloseester und Celluloseether, wie Carboxymethylcellulose Methylhydroxyethylcellulose, Methylhydroxypropy-Icellulose und Hydroxyethylcellulose. Insbesondere bevorzugt ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum monodispersen Perlpolymerisat kann in einer alternativen bevorzugten Ausführungsform in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt beispielsweise 0,5 - 500 mmol/l und vorzugsweise 2,5 - 100 mmol/l.

Die Rührgeschwindigkeit bei der Polymerisation zum monodispersen Perlpolymerisat ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt vorzugsweise 1 : 0,75 bis 1 : 20, besonders bevorzugt 1 : 1 bis 1 : 6.

Die Polymerisationstemperatur zum monodispersen Perlpolymerisat richtet sich nach der Zerfallstemperatur des eingesetzten Initiators. Sie liegt vorzugsweise zwischen 50 bis 180°C, besonders bevorzugt zwischen 55 und 130°C. Die Polymerisation dauert vorzugsweise 0,5 bis etwa 20 Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das monodisperse Perlpolymerisat mit üblichen Methoden, beispielsweise durch Filtrieren oder Dekantieren, isoliert und gegebenenfalls gewaschen.

Die Herstellung der monodispersen Perlpolymerisate mit Hilfe des Jetting Prinzipes oder des Seed-Feed-Prinzip ist aus dem Stand der Technik bekannt und z.B. in US-A 4 444 961, EP-A 0 046 535, US 4 419 245 oder WO 93/12167 beschrieben.

Bevorzugt erfolgt die Herstellung der monodispersen Perlpolymerisate mit Hilfe des Jetting Prinzipes oder des Seed-Feed-Prinzip.

Bevorzugt wird in Verfahrensschritt 1) ein makroporöses, monodisperses Perlpolymerisat hergestellt.

Im Verfahrensschritt 2) wird bevorzugt zunächst das Amidomethylierungsreagens hergestellt. Dazu wird beispielsweise ein Phthalimid oder ein Phthalimidderivat in einem Lösungsmittel gelöst und mit Formalin versetzt. Anschließend wird unter Wasserabspaltung hieraus ein Bis(phthalimido)ether gebildet. Bevorzugte Phthalimidderivate im Sinne der vorliegenden Erfindung sind Phthalimid selber oder substituierte Phthalimide, beispielsweise Methylphthalimid. In Verfahrensschritt 2) könnte aber ebenfalls das Phthalimidderivat bzw. das Phthalimid in Gegenwart von Paraformaldehyd mit dem Perlpolymerisat aus Schritt 1) umgesetzt werden.

Im Allgemeinen liegt das molare Verhältnis der Phthalimiderivate zu den Perlpolymerisaten im Verfahrensschritt 2) bei 0,15:1 bis 1,7:1, wobei auch andere Stoffmengenverhältnisse gewählt werden können. Bevorzugt wird das Phthalimidderivat in einem Stoffmengenverhältnis von 0,7:1 bis 1,45:1 in Verfahrensschritt 2) eingesetzt.

Formalin wird üblicherweise bezogen auf das Phthalimidderivat im Überschuß eingesetzt, es können aber auch andere Mengen eingesetzt werden. Bevorzugt wird pro mol Phthalimidderivat 1,01 bis 1,2 mol Formalin eingesetzt.

Im Allgemeinen kommen im Verfahrensschritt 2) inerte Lösungsmittel zum Einsatz, die geeignet sind, das Polymer zu quellen, bevorzugt chlorierte Kohlenwasserstoffe, besonders bevorzugt Dichlorethan oder Methylenchlorid. Es sind aber auch Verfahren denkbar, die ohne Einsatz von Lösungsmitteln durchführbar sind.

Im Verfahrensschritt 2) wird das Perlpolymerisat mit Phthalimidderivaten kondensiert. Als Katalysator wird hierbei vorzugsweise Oleum, Schwefelsäure oder Schwefeltrioxid eingesetzt, um daraus ein SO₃-Addukt des Phthalimidderivats im inerten Lösungsmittel herzustellen.

Im Verfahrensschritt 2) wird üblicherweise der Katalysator im Unterschuss zum Phthalimidderivat zugesetzt, wenn gleich auch größere Mengen verwendet werden können. Bevorzugt liegt das molare Verhältnis des Katalysators zu den Phthalimidderivaten zwischen 0,1 : 1 und 0,45 : 1 . Besonders bevorzugt liegt das molare Verhältnis des Katalysators zu den Phthalimidderivaten zwischen 0,2 : 1 und 0,4 : 1.

Verfahrensschritt 2) wird bei Temperaturen zwischen vorzugsweise 20 bis 120°C, besonders bevorzugt von 60°C bis 90°C durchgeführt.

Die Abspaltung des Phthalsäurerestes und damit die Freilegung der Aminomethylgruppe erfolgt im Verfahrensschritt 3) vorzugsweise durch Behandeln des phthalimidomethylierten vernetzten Perlpolymerisates mit wässrigen oder alkoholischen Lösungen eines Alkalihydroxids, wie Natriumhydroxid oder Kaliumhydroxid bei Temperaturen von 100 °C und 250°C, vorzugsweise 120°C -190°C. Die Konzentration der Natronlauge beträgt vorzugsweise 20 Gew.% bis 40 Gew.-%. Dieses Verfahren ermöglicht die Herstellung aminoalkylgruppenhaltiger Perlpolymerisate.

Das dabei entstehende aminomethylierte Perlpolymerisat wird im Allgemeinen mit voll entsalztem Wasser alkalifrei gewaschen. Es kann aber auch ohne Nachbehandlung eingesetzt werden.

Die Umsetzung der im Verfahrensschritt 3) erhaltenen aminomethylgruppenhaltiger, Perlpolymerisate zu den Chelatharzen enthaltend funktionelle Gruppen des Strukturelements (I) erfolgt nach gängigen, dem Fachmann bekannten Verfahren.

Bevorzugt erfolgt die Herstellung der erfindungsgemäß verwendeten Chelatharze enthaltend funktionelle Gruppen des Strukturelements (I), wobei R₁ und R₂ unabhängig voneinander = -CH₂COOX oder H sind, aber R₁ und R₂ nicht gleichzeitig für Wasserstoff stehen können und X für Wasserstoff, Natrium oder Kalium steht, durch Umsetzung des aminomethylgruppenhaltigen Perlpolymerisat aus Verfahrensschritt 3) in wässriger Suspension mit Chloressigsäure oder ihren Derivaten. Ein insbesondere bevorzugtes Chloressigsäurederivat ist das Natriumsalz der Chloressigsäure.

Das Natriumsalz der Chloressigsäure wird bevorzugt als wässrige Lösung eingesetzt.

Die wässrige Lösung des Natriumsalzes der Chloressigsäure wird bei der Reaktionstemperatur vorzugsweise innerhalb von 0,5 bis 15 Stunden in die vorgelegte wässrige Suspension des aminomethylgruppenhaltigen, sulfonierten Perlpolymerisat dosiert. Besonders bevorzugt erfolgt die Dosierung bevorzugt innerhalb von 5 bis 11 Stunden .

Die bei der Umsetzung der aminomethylgruppenhaltigen Perlpolymerisate mit Chloressigsäure freiwerdende Salzsäure wird durch Zugabe von Natronlauge teilweise oder ganz neutralisiert, sodass der pH Wert der wässrigen Suspension bei dieser Reaktion im Bereich vorzugsweise zwischen pH 5 bis 10,5 eingestellt wird. Besonders bevorzugt wird die Reaktion bei pH 9,5 durchgeführt.

Die Reaktion der aminomethylgruppenhaltigen Perlpolymerisate mit Chloressigsäure wird bei Temperaturen vorzugsweise im Bereich zwischen 50 und 100 °C durchgeführt. Besonders bevorzugt erfolgt die Reaktion der aminomethylgruppenhaltigen Perlpolymerisate mit Chloressigsäure bei Temperaturen im Bereich zwischen 80 und 95°C.

Als Suspensionsmedium wird vorzugsweise Wasser oder wässrige Salzlösung eingesetzt. Als Salze kommen Alkalimetallsalze insbesondere NaCl und Natriumsulfat in Frage.

Der durchschnittliche Substitutionsgrad der Amingruppen des Chelatharzes enthaltend funktionelle Gruppen des Strukturelements (I), wobei R₁ und R₂ unabhängig voneinander = -CH₂COOX oder H sind, aber R₁ und R₂ nicht gleichzeitig für Wasserstoff stehen können und X für Wasserstoff, Natrium oder Kalium steht, beträgt vorzugsweise 1,4 bis 1,9.

Der durchschnittliche Substitutionsgrad gibt das statistische Verhältnis zwischen nichtsubstituierten, mono-substituierten und disubstituierten Aminogruppen an. Der durchschnittliche Substitutionsgrad kann daher zwischen 0 und 2 liegen. Bei einem Substitutionsgrad von 0 würde keine Substitution stattgefunden haben und die Amingruppen des Strukturelementes (I) würden als primäre Aminogruppen vorliegen. Bei einem Substitutionsgrad von 2 würden sämtliche Aminogruppen im Harz disubstituiert vorliegen. Bei einem Substitutionsgrad von 1 würden statistisch betrachtet sämtliche Aminogruppen im Harz monosubstituiert vorliegen.

Bevorzugt erfolgt die Herstellung der erfindungsgemäß verwendeten Chelatharzen mit funktionellen Gruppen des Strukturelements (I), wobei R₁ und R₂ unabhängig voneinander = -CH₂PO(OX¹)₂, -CH₂PO(OH)OX² oder Wasserstoff sind, aber beide nicht gleichzeitig für Wasserstoff stehen können und X¹ und X² unabhängig voneinander für Wasserstoff, Natrium oder Kalium steht, durch Umsetzung des aminomethylgruppenhaltigen Perlpolymerisat aus Verfahrensschritt 3) in schwefelsaure Suspension mit Formalin in Kombination mit P-H aciden (nach modifizierter Mannich Reaktion) Verbindungen, bevorzugt mit phosphoriger Säure, Monoalkylphosphorigsäureester, oder Dialkylphosphorigsäureester.

Besonders bevorzugt wird Formalin in Kombination mit P-H aciden Verbindungen, wie phosphorige Säure oder Dimethylphosphit, eingesetzt.

Die Umsetzung des aminomethylgruppenhaltigen Perlpolymerisates zu Chelatharzen enthaltend funktionelle Gruppen des Strukturelements (I) erfolgt, in dem Fall, dass R₁ und R₂ unabhängig voneinander = -CH₂PO(OX¹)₂, -CH₂PO(OH)OX² oder Wasserstoff sind, aber beide nicht gleichzeitig für Wasserstoff stehen können und X¹ und X² unabhängig voneinander für Wasserstoff, Natrium oder Kalium steht, bevorzugt bei Temperaturen im Bereich von 70 bis 120 °C, besonders bevorzugt bei Temperaturen im Bereich zwischen 90 und 110°C .

Der durchschnittliche Substitutionsgrad der Amingruppen des Chelatharzes enthaltend funktionellen Gruppen des Strukturelements (I), wobei R₁ und R₂ unabhängig voneinander = -CH₂PO(OX¹)₂, -CH₂PO(OH)OX² oder Wasserstoff sind, aber beide nicht gleichzeitig für Wasserstoff stehen können und X¹ und X² unabhängig voneinander für Wasserstoff, Natrium oder Kalium steht, beträgt vorzugsweise 1,4 bis 2,0. Besonders bevorzugt beträgt der durchschnittliche Substitutionsgrad der Amingruppen des Chelatharzes enthaltend funktionellen Gruppen des Strukturelements (I), wobei R₁ und R₂ unabhängig voneinander = -CH₂PO(OX¹)₂, -CH₂PO(OH)OX² oder Wasserstoff sind, aber beide nicht gleichzeitig für Wasserstoff stehen können und X¹ und X² unabhängig voneinander für Wasserstoff, Natrium oder Kalium steht, 1,4 bis 1,9. Bevorzugt erfolgt die Herstellung der erfindungsgemäßen Chelatharz enthaltend funktionelle Gruppen des Strukturelements (I), wobei R₁ und R₂ unabhängig voneinander = -CH₂-Pyridyl oder Wasserstoff sind, aber beide nicht gleichzeitig für Wasserstoff stehen können, im Verfahrensschritt 4) durch Umsetzung des Perlpolymerisat aus Verfahrensschritt 3) in wässriger Suspension mit Chlormethylpyridin bzw. seinem Hydrochlorid oder mit 2-Chlormethylchinolin oder 2- Chlormethylpiperidin.

Chlormethylpyridin bzw. sein Hydrochlorid kann als 2-Chlormethylpyridin, 3-Chlormethylpyridin oder 4-Chlormethylpyridin eingesetzt werden.

Die Umsetzung im Verfahrensschritt 4) erfolgt dann, wenn das Strukturelement (I) ein -CH₂-Pyridylrest darstellt, bevorzugt unter Einhaltung eines pH-Wertes im Bereich von 4 bis 9, und wird bevorzugt unter Zugabe von Alkali durchgeführt, besonders bevorzugt von Kalilauge oder Natronlauge, insbesondere bevorzugt von Natronlauge. Durch Zugabe von Alkali bei der Umsetzung des aminomethylgruppenhaltigen, sulfonierten Perlpolymerisat aus Verfahrensschritt 3) in wässriger Suspension mit Picolylchlorid oder seinem Hydrochlorid, wird der pH Wert bei der Umsetzung bevorzugt im Bereich 4 - 9 gehalten. Besonders bevorzugt wird der pH Wert im Bereich 6 - 8 gehalten.

Die Umsetzung gemäß Verfahrensschritt 4) erfolgt dann, wenn das Strukturelement (I) ein Picolylaminrest darstellt, bevorzugt im Temperaturbereich von 40 bis 100°C, besonders bevorzugt im Temperaturbereich von 50 bis 80°C. Das in den Schritten 1) bis 3) beschriebene Verfahren ist als Phthalimidverfahren bekannt. Neben dem Phthalimidverfahren besteht ebenfalls die Möglichkeit mit Hilfe des Chlormethylierungsverfahrens ein aminomethyliertes Perlpolymerisat herzustellen. Nach dem Chlormethylierungsverfahren, das z.B. in der EP-A 1 568 660 beschrieben wird, werden zunächst Perlpolymerisate - meist auf Styrol/Divinylbenzol Basis - hergestellt, chlormethyliert und anschließend mit Aminen umgesetzt (Helfferich, Ionenaustauscher, Seite 46 -58 , Verlag Chemie, Weinheim, 1959) sowie EP-A 0 481 603). Der Ionenaustauscher enthaltend Polymer mit funktionellen Gruppen der Formel (I) kann nach dem Phthalimidverfahren oder dem Chlormethylierungsverfahren hergestellt werden. Bevorzugt erfolgt die Herstellung des erfindungsgemäßen lonnenaustauschers nach dem Phthalimidverfahren, gemäß Verfahrensschritte 1) bis 3), der dann gegebenenfalls gemäß Schritt 4) zum Chelatharz funktionalisiert wird.

In einer weiteren Ausführungsform der Erfindung wird in Verfahrensschritt b.) ein makroporöses, monodisperses Chelatharz enthaltend funktionelle Gruppen des Strukturelements (I) eingesetzt. In diesem Fall sind R₁ und R₂ unabhängig voneinander = - CH₂PO(OX¹)₂, -CH₂PO(OH)OX² oder Wasserstoff, wobei beide nicht gleichzeitig für Wasserstoff stehen können und X¹ und X² unabhängig voneinander Wasserstoff, Natrium oder Kalium. Das Perlpolymerisat des Chelatharzes enthaltend funktionelle Gruppen des Strukturelements (I) weist in Verfahrensschritt b.) vorzugsweise eine Durchmesser von 250 bis 450 µm auf.

In einer weiteren Ausführungsform der Erfindung wird in Verfahrensschritt c.) ein makroporöses, monodisperses Chelatharz enthaltend funktionelle Gruppen des Strukturelements (I) eingesetzt. In diesem Fall sind R₁ und R₂ unabhängig voneinander = - CH₂PO(OX¹)₂, -CH₂PO(OH)OX² oder Wasserstoff, wobei beide nicht gleichzeitig für Wasserstoff stehen können und X¹ und X² unabhängig voneinander Wasserstoff, Natrium oder Kalium. Das Perlpolymerisat des Chelatharzes enthaltend funktionelle Gruppen des Strukturelements (I) weist in Verfahrensschritt c.) vorzugsweise eine Durchmesser von 250 bis 450 µm auf.

In einer weiteren Ausführungsform der Erfindung wird in Verfahrensschritt b.) ein makroporöses, monodisperses Chelatharz enthaltend funktionelle Gruppen des Strukturelements (I) eingesetzt. In diesem Fall sind R₁ und R₂ unabhängig voneinander = - CH₂COOX oder H, aber R₁ und R₂ stehen nicht gleichzeitig für Wasserstoff und X steht für Wasserstoff, Natrium oder Kalium. Das Perlpolymerisat des Chelatharzes enthaltend funktionelle Gruppen des Strukturelements (I) weist in Verfahrensschritt b.) vorzugsweise eine Durchmesser von 250 bis 450 µm auf.

In einer weiteren Ausführungsform der Erfindung wird in Verfahrensschritt c.) ein makroporöses, monodisperses Chelatharz enthaltend funktionelle Gruppen des Strukturelements (I) eingesetzt. In diesem Fall sind R₁ und R₂ unabhängig voneinander = - CH₂COOX oder H, aber R₁ und R₂ stehen nicht gleichzeitig für Wasserstoff und X steht für Wasserstoff, Natrium oder Kalium. Das Perlpolymerisat des Chelatharzes enthaltend funktionelle Gruppen des Strukturelements (I) weist in Verfahrensschritt c.) vorzugsweise eine Durchmesser von 250 bis 450 µm auf.

Die Bestimmung der totalen Kapazität des makroporösen, monodispersen Chelatharz enthaltend funktionelle Gruppen des Strukturelements (I) erfolgt gemäß DIN 54403 (Prüfung von Ionenaustauschern - Bestimmung der Totalen Kapazität von Kationenaustauschern.)

Vorzugsweise weisen makroporöses, monodisperses Chelatharz enthaltend funktionelle Gruppen des Strukturelements (I) eine totale Kapazität von 2.0 mol/L bis 3.5 mol/L auf.

Vorzugsweise werden in Verfahrensschritt b.) und c.) die gleichen Chelatharze enthaltend funktionelle Gruppen des Strukturelements (I) eingesetzt.

Durch den Verfahrensschritt b.) werden insbesondere metallhaltige Verunreinigungen aus dem Überstand aus Verfahrensschritt a.) abgetrennt. In einer bevorzugten Ausführungsform werden die Gewichtskonzentrationen der Calcium- und Magnesiumionen in dem Durchlauf aus Verfahrensschritt b.) auf 5 ppb bis 50 ppb, bevorzugt auf 5 ppb bis 30 ppb reduziert. Bevorzugt betragen die Gewichtskonzentrationen an Lithium in dem Durchlauf aus Verfahrensschritt b.) 1 ppm bis 500 ppm.

Vorzugsweise werden in Verfahrensschritt b.) 0.1 % bis 10 % der totalen Kapazität des Harzes mit Lithiumionen belegt.

In einer weiteren bevorzugten Ausführungsform werden in Verfahrensschritt b.) 2000 L bis 20000 L aufgereinigte Sole aus Verfahrensschritt a.) pro Liter Harz eingesetzt.

In einer weiteren bevorzugten Ausführungsform werden die Gewichtskonzentrationen der Strontiumionen in dem Durchlauf auf 35 bbp bis 50 bbp reduziert.

Als Durchlauf im Sinne der Erfindung wird der Überstand bezeichnet, der nach dem in Kontakt bringen des Chelatharzes enthaltend funktionelle Gruppen des Strukturelements (I) entsteht. Dieser kann z.B. der im Rahmen eines Batchverfahrens entstandene der Überstand sein oder, da der Überstand aus Verfahrensschritt a.) auch auf eine Säule in der sich das Chelatharz enthaltend funktionelle Gruppen des Strukturelements (I) befindet, aufgetragen werden kann, auch der daraus zu erhaltene Durchlauf sein.

In Verfahrensschritt c.) wird der Durchlauf aus Verfahrensschritt b.) mit mindestens einem Chelatharz enthaltend funktionelle Gruppen des Strukturelements (I) in Kontakt gebracht. Vorzugsweise werden in Verfahrensschritt c.) 100 L bis 400 L des Durchlaufs aus Verfahrensschritt b.) pro Liter Harz eingesetzt. Vorzugsweise wird die Beladung des Chelatharzes enthaltend funktionelle Gruppen des Strukturelements (I) mit Lithium aus dem Durchlauf in Verfahrensschritt c.) solange durchgeführt, bis das Chelatharz nicht weiter mit Lithium beladen werden kann. Vorzugsweise werden 1 g bis 20 g Lithium pro Liter Harz gebunden. Es werden in Verfahrensschritt c.) 30 % bis 96 % der totalen Kapazität des Harzes mit Lithium abgedeckt. Besonders bevorzugt werden in Verfahrensschritt c.) 50 % bis 85 % der totalen Kapazität mit Lithium belegt.

In einer bevorzugten Ausführungsform der Erfindung hat der Durchlauf aus Verfahrensschritt b) ein pH-Wert von 10 bis 12, wenn er mit dem Chelatharz enthaltend funktionelle Gruppen des Strukturelements (I) in Kontakt gebracht wird. Der pH-Wert von 10 bis 12 liegt bevorzugt dadurch vor, dass ein basisches Fällungsmittel eingesetzt wird. Bevorzugt kann eine Base zugegeben werden, um den pH-Wert einzustellen. Als Basen zur Einstellung des pH Wertes des pH-Wertes des Durchlaufes aus Verfahrensschritt b.) werden vorzugsweise Alkalimetallhydroxide, wie insbesondere Natriumcarbonat, Natriumhydroxid und Kaliumhydroxid oder Gemische dieser Basen eingesetzt.

In einer bevorzugten Ausführungsform der Erfindung wird der Durchlauf aus Verfahrensschritt b.) wieder auf das in Verfahrensschritt b.) eingesetzte, aber regenerierte Harz, zurückgeführt. Besonders bevorzugt kann der Durchlauf aus Verfahrensschritt b.) mindestens zweimal in den Verfahrensschritt b.) zurückgeführt werden.

Zur Regeneration des Chelatharzes enthaltend funktionelle Gruppen des Strukturelements (I) aus Verfahrensschritt b.) wird dieses vorzugsweise mit demineralisiertem Wasser gewaschen. Danach wird es mit Säure regeneriert, vorzugsweise mit einer anorganischen Säure regeneriert, mit Wasser gewaschen und mit Base konditioniert. Vorzugsweise wird als Base NaOH eingesetzt. Danach wird das Chelatharz enthaltend funktionelle Gruppen des Strukturelements (I), vorzugsweise erneut mit demineralisiertem Wasser, alkalifrei gewaschen.

In Verfahrensschritt d.) wird das an dem Chelatharz enthaltend funktionelle Gruppen des Strukturelements (I) adsorbierte Lithium eluiert. Als Elutionsmittel werden anorganische Säuren eingesetzt. Als anorganische Säuren können vorzugsweise Schwefelsäure, Salpetersäure, Phosphorsäure oder Halogenwasserstoffsäuren, wie vorzugsweise Salzsäure und Flusssäure, eingesetzt werden. Besonders bevorzugt wird Salzsäure als anorganische Säure eingesetzt. Die anorganischen Säuren werden vorzugsweise in einer Konzentration von 1 Gew. % bis 10 Gew. % in Verfahrensschritt d.) eingesetzt.

In Verfahrensschritt d.) wird vorzugsweise zunächst der Überstand, vor der Elution, durch Druckluft von dem Chelatharz enthaltend funktionelle Gruppen des Strukturelements (I) entfernt. Ebenso könnte dieser Überstand auch durch Waschung, z.B. mittels demineralisiertem Wasser, entfernt werden. Danach erfolgt vorzugsweise die Elution des Lithiums mittels anorganischer Säuren. Vorzugsweise wird danach erneut mittels Druckluft und Waschung durch demineralisiertem Wasser das Chelatharz enthaltend funktionelle Gruppen des Strukturelements (I) gewaschen. Das Eluat aus Verfahrensschritt d.) wird vorzugsweise mehrfach zur Beladung des Chelatharzes enthaltend funktionelle Gruppen des Strukturelements (I) in Verfahrensschritt c.) zurückgeführt. Dazu wird das Eluat durch Zugabe einer Base vor dem in Kontakt bringen mit dem Chelatharz enthaltend funktionelle Gruppen des Strukturelements (I) auf einen pH > 7 eingestellt. Als Basen könnten alle Verbindungen, die nach dem Lewis- oder Brönstedt-Konzept als Basen, fungieren können, eingesetzt werden. Insbesondere könnten Alkali- oder Erdalkalimetallhydroxide oder Ammoniumhydroxid oder Anionenaustauscher in der Hydroxidform eingesetzt werden. Bevorzugt liegt der pH-Wert des Eluats zwischen 10 und 12. Bevorzugt werden als Basen Alkalimetallhydroxide, wie vorzugsweise mit Ammoniumhydroxid, Natriumhydroxid oder Kaliumhydroxid oder Gemische dieser Basen zur Einstellung des pH-Wertes des Eluats eingesetzt. Besonders bevorzugt wird Natriumhydroxid eingesetzt. Besonders bevorzugt wird der Verfahrensschritt c.) mindestens fünfmal mit dem Eluat aus dem Verfahrensschritt d.) durchgeführt. Durch die erneute Aufgabe des Eluats auf die Säule wird das Lithium an der Säule zunächst adsorbiert. Durch die Wiederholung dieser Schritte erfolgt eine Konzentration des Lithiums an der Säule.

Das Eluat aus Verfahrensschritt d.) enthält vorzugsweise Lithiumionen in einer Gewichtskonzentration von 1 g/L bis 10 g/L, besonders bevorzugt von 5 g/L bis 10 g/L.

In einer weiteren Ausführungsform der Erfindung enthält das Eluat aus Verfahrensschritt d.) vorzugsweise Lithiumionen in einer Gewichtskonzentration von 1 g/L bis 10 g/L, Natriumionen in einer Gewichtskonzentration von 1 ppm bis 100, bevorzugt 50 g/L, und Calcium- und Magnesiumionen in einer Gewichtskonzentration von 2 ppb bis 20 ppb. In einer weiteren bevorzugten Ausführungsform enthält das Eluat Strontiumionen in einer Gewichtskonzentration von 1 ppb bis 10 ppb.

Das in Verfahrensschritt d.) gewonnene Lithiumsalz wird in Verfahrensschritt e.) in Lithiumcarbonat überführt.

Das Lithiumsalz, vorzugsweise Lithiumchlorid, wird vorzugsweise mit einem Alkalimetallcarbonat in das Lithiumcarbonat in Verfahrensschritt e.) überführt. Es kann aber ebenfalls durch Zugabe von Kohlendioxid oder der Zugabe von Kohlensäure ausgefällt werden. Als Alkalimetallcarbonate werden vorzugsweise Natriumcarbonat, Kaliumcarbonat oder Mischungen dieser Verbindungen eingesetzt. In einer bevorzugten Ausführungsform der Erfindung wird das Alkalimetallcarbonat, vorzugsweise Natriumcarbonat, zunächst in Wasser gelöst und dann in das Eluat aus Verfahrensschritt e.) gegeben. Das Lithiumcarbonat wird dann vorzugsweise abfiltriert und kann dann getrocknet werden.

Das molare Verhältnis Lithiumgehalt und Alkalimetallcarbonat in Verfahrensschritt e.) beträgt vorzugsweise von 10 : 1 bis 1 : 10 besonders bevorzugt von 1 : 1 bis 1 : 5.

Der pH Wert beträgt bei der Fällung in Verfahrensschritt e.) vorzugsweise 9 bis 12. Die Einstellung des pH Wertes erfolgt vorzugsweise dadurch, dass ein basisches Fällungsmittel, wie vorzugsweise Alkalimetallcarbonate eingesetzt werden. Der pH Wert kann aber auch durch Zugabe einer Base, wie vorzugsweise Natrium- oder/und Kaliumhydroxid auf einen pH Wert von 9 bis 12 eingestellt werden.

Bevorzugt erfolgt die Fällung in Verfahrensschritt e.) bei Temperaturen von 70 °C bis 100 °C, besonders bevorzugt bei Temperaturen von 80 °C bis 95°C. Die Abtrennung vom Überstand erfolgt nach aus dem Stand der Technik bekannten Verfahren, wie vorzugsweise durch Filtration.

Das Lithiumcarbonat kann weiteren Reinigungsverfahren, wie z.B. der Kristallisation unterzogen werden oder direkt zur Herstellung von Lithium eingesetzt werden. Die Verfahren zur Kristallisation von Lithiumcarbonat sind dem Fachmann hinreichend bekannt. Durch Kristallisation kann Lithiumcarbonat mit einer Reinheit von mindestens 99,9 % gewonnen werden.

Das Lithiumcarbonat kann durch elektrolytische Aufarbeitung in elementares, hochreines Lithium überführt werden. Entsprechende Verfahren sind dem Fachmann aus dem Stand der Technik bekannt.

In einer besonders bevorzugten Ausführungsform werden in Verfahrensschritt a.) mindestens eine lithiumhaltige Sole enthaltend
Lithiumionen in einer Gewichtskonzentration von 0,1 ppm bis 1000 ppm,
Natriumionen in einer Gewichtskonzentration von 0,1 ppm bis 100 g/L und
Calciumionen in einer Gewichtskonzentration von 0,1 ppm bis 100 g/L und
Magnesiumionen in einer Gewichtskonzentration von 0,1 ppm bis 100 g/L und
Strontiumionen in einer Gewichtskonzentration von 0,1 ppm bis 100 g/l
mit einem basischen Fällungsmittel, bevorzugt Natriumcarbonat, in einem molaren Verhältnis von 3:1 bis 1:1 Fällungsmittel zu Magnesium- und Calciumionen vermischt und das Fällungsprodukt, bevorzugt durch Filtration, abgetrennt und der Überstand enthaltend
Lithiumionen in einer Gewichtskonzentration 0,1 ppm bis 500 ppm,
Natriumionen in einer Gewichtskonzentration von 0,1 ppm bis 100 g/L und
Calciumionen in einer Gewichtskonzentration von 10 ppm bis 100 ppm und
Magnesiumionen in einer Gewichtskonzentration von 10 ppm bis 100 ppm und
Strontiumionen in einer Gewichtskonzentration von 10 ppm bis 100 ppm
in einem Verfahrensschritt b.) auf ein makroporöses, monodisperses Chelatharz enthaltend funktionelle Gruppen des Strukturelements (I) bei einem pH-Wert von 10 bis 12 aufgetragen und der Durchlauf aus diesem Verfahrensschritt b.) enthaltend
Lithiumionen in einer Gewichtskonzentration 0,1 ppm bis 500 ppm,
Natriumionen in einer Gewichtskonzentration von 0,1 ppm bis 100 g/L und
Calciumionen in einer Gewichtskonzentration von 5 ppb bis 50 ppb und
Magnesiumionen in einer Gewichtskonzentration von 5 ppb bis 50 ppb und
Strontiumionen in einer Gewichtskonzentration von 5 ppb bis 50 ppb
in einem Verfahrensschritt c.) auf ein makroporöses, monodisperses Chelatharz enthaltend funktionelle Gruppen des Strukturelements (I) bei einem pH-Wert von 10 bis 12 aufgetragen, wobei, gegebenenfalls durch mehrfache Beladung mittels des basischen Eluates aus Verfahrensschritt d.), 50 % bis 96 % der totalen Kapazität des makroporösen, monodispersen Chelatharz enthaltend funktionelle Gruppen des Strukturelements (I) mit Lithium beladen werden und dann in einem Verfahrensschritt d.) das in Verfahrensschritt c.) auf dem Chelatharz enthaltend funktionelle Gruppen des Strukturelements (I) adsorbierte Lithium durch Zugabe von anorganischen Säuren, bevorzugt durch Zugabe von HCL, eluiert wird und dabei eine lithiumhaltige Lösung enthaltend
Lithiumionen in einer Gewichtskonzentration von 1 g/L bis 10 g/L,
Natriumionen in einer Gewichtskonzentration von 1 ppm bis 100, bevorzugt 50 g/L und
Calciumionen in einer Gewichtskonzentration von 2 ppb bis 20 ppb und
Magnesiumionen in einer Gewichtskonzentration von 2 ppb bis 20 ppb und
Strontiumionen in einer Gewichtskonzentration von 1 ppb bis 10 ppb
generiert wird und in einem Verfahrensschritt e.) das lithiumhaltige Eluat aus Verfahrensschritt d.) mit mindestens einem Carbonat oder mit Kohlendioxid oder dessen Säure versetzt wird und dabei Lithiumcarbonat in einer Reinheit von mindestens 99,5 Gew. % hergestellt wird.

Mit dem erfindungsgemäßen Verfahren kann hochreines Lithiumcarbonat aus lithiumhaltigen Solen gewonnen werden. Ein wesentlicher Vorteil des erfindungsgemäßen Verfahrens besteht darin, dass in einem fünf Schritt System: 1.) Fällung 2.) weitere Reduktion des Calcium- und Magnesiumionengehaltes mit einem Chelatharz 3.) Konzentration durch Lithiumadsorption auf dem Chelatharz 4.) Elution und 5.) Umwandlung des Lithiumsalzes in Lithiumcarbonat mit vergleichsweise geringen technischem Aufwand ökonomisch effizient hochreines Lithiumcarbonat gewonnen werden kann. Zudem kann der Zeitraum, der für die Herstellung benötigt wird erheblich verkürzt werden, da keine zeitraubenden Verdampfungsverfahren mittels Sonneneinstrahlung benötigt werden. Des Weiteren kann die Ausbeute an Lithium verbessert werden.

Die nachfolgenden Beispiele dienen nur der Beschreibung der Erfindung und sollen diese nicht beschränken.

### Methoden

Die Bestimmung der lonenkonzentration kann nach dem Fachmann aus dem Stand der Technik bekannten Verfahren erfolgen. Vorzugsweise erfolgt die Bestimmung der lonenkonzentration in dem erfindungsgemäßen Verfahren mittels einem induktiv gekoppelten Plasmaspektrometer (ICP).

Der Ablauf der Ionenaustauschersäule wurde dabei in 10 ml Fraktionen fraktioniert und mittels ICP analysiert und die lonenkonzentration bestimmt.

### Beispiel 1

### A) Entfernung von Calciumionen, Magnesiumionen und Strontiumionen durch Fällung

Zu 1 I Sole (37g/l Ca²⁺, 3,7g/l Mg²⁺, 2,3 g/l Sr²⁺, 65 g/l Na⁺ und 140 ppm Li⁺ (0,014 g/l) wurde 0,32 L einer Lösung aus Na₂CO₂ (400g/l, 129,3g) und 0,05 L NaOH (1000g/l, 48.8 g) über einen Zeitraum von 30 min bei 60 °C hinzugegeben. Die Sole und das Fällungsmittel wurde dabei bei einer Rührrate von 350 rpm vermischt. Die entstehende Dispersion wurde über einen Filtertrichter bei einem Druck von 2 bar abfiltriert. Die gereinigte Sole enthielt Ca²⁺, Sr²⁺ und Mg²⁺ in einer Konzentration unter 20 ppm und weiterhin 140 ppm Li⁺ und hatte einen pH Wert von 11.

### B) Entfernung von Ca²⁺, Sr²⁺ und Mg²⁺ mittels eines aminomethylphosphonsäuregruppenhaltigen Chelatharzes

Ein Messzylinder wurde mit 50 ml eines makroporösen, monodispersen Chelatharz enthaltend funktionelle Gruppen des Strukturelements (I) mit R₁ und R₂ unabhängig voneinander = -CH₂PO(OX¹)₂, -CH₂PO(OH)OX² oder Wasserstoff, wobei beide nicht gleichzeitig für Wasserstoff stehen können und X¹ und X² = Wasserstoff sind, gefüllt. Das Perlpolymerisates des Chelatharz hatte einen Durchmesser von 430 µm. Der durchschnittliche Substitutionsgrad des hier eingesetzten Chelatharzes enthaltend funktionelle Gruppen des Strukturelements (I) beträgt 2,0. Das Harz hat eine totale Kapazität von 3,2 mol/L. Das Harz wurde dann in eine 100 ml Chromatographiesäule mit einem Durchmesser von 3 cm umgefüllt, wobei darauf geachtet wurde, dass sich zwischen den Polymerkügelchen keine Luftblasen befanden. 267 I der aufgereinigten Salzsole aus A) wurde mit eine Pumprate von 1000 ml/h auf die Chromatographiesäule gepumpt. Dabei wurde das Harz mit 42 g Ca²⁺, Sr²⁺ Mg²⁺ pro Liter Harz beladen. Nach 52 h wurde der Durchbruch erreicht und die erhaltenen Salzsole enthielt Ca²⁺, Sr²⁺ und Mg²⁺ in einer Konzentration unter 20 ppb und die Konzentration der Li⁺ betrug weiterhin 140 ppm. Nachdem die Salzsole durch Spülung mit 4 BV (Bettvolumen) (1 BV= 50 mL Harz) demineralisiertem Wasser von der Säule entfernt wurde, wurde das Harz mit 2 BV 7.5% HCl, 4BV/h regeneriert. Danach wurde das Harz erneut mit 4 BV (1 BV= 50 mL Harz) demineralisiertem Wasser gewaschen und mit 2 BV 4% NaOH, 4 BV/h in die Natriumform überführt.

### C) Lithiumadsorption und -konzentration an dem aminomethylphosphonsäuregruppenhaltigen Chelatharz

Ein Messzylinder wurde mit 50 ml eines makroporösen, monodispersen Chelatharz enthaltend funktionelle Gruppen des Strukturelements (I) mit R₁ und R₂ unabhängig voneinander = -CH₂PO(OX¹)₂, -CH₂PO(OH)OX² oder Wasserstoff, wobei beide nicht gleichzeitig für Wasserstoff stehen können und X¹ und X² = Wasserstoff sind, gefüllt. Das Perlpolymerisates des Chelatharz hatte einen Durchmesser von 430 µm. Der durchschnittliche Substitutionsgrad des hier eingesetzten Chelatharzes enthaltend funktionelle Gruppen des Strukturelements (I) beträgt 2,0. Das Harz hat eine totale Kapazität von 3,2 mol/L. Das Harz wurde dann in eine 100 ml Chromatographiesäule mit einem Durchmesser von 3 cm umgefüllt, wobei darauf geachtet wurde, dass sich zwischen den Polymerkügelchen keine Luftblasen befanden.

9,2 I der aus B) gereinigten Salzsole wurde mit einer konstanten Flußrate von 250 ml/h auf das Harz gepumpt. Das Harz wurde mit 1.83 g Lithium pro Liter Harz beladen und weist damit eine nutzbare Kapazität von 1,83 g/l auf. Damit wurde 8 % der totalen Kapazität mit Lithium belegt. Nach 4 h war der Durchbruch erreicht. Nachdem die Salzsole durch Druckluft von der Säule entfernt wurde, wurde das Harz mit 1 BV 7.5% HCl, 4BV/h regeneriert. Das Eluat wurde mit Natriumhydroxid auf einen pH 10,5 eingestellt und wieder auf die Säule aufgetragen. Dieses Verfahren wurde 5 mal wiederholt wobei 50 % - 96 % der totalen Kapazität mit Lithium belegt wurde. Hierbei wurde eine Lösung mit 7 g/l Lithium erhalten woraus Lithiumchlorid gewonnen wurde.

### D) Gewinnung von Lithiumcarbonat durch Fällung

Der pH der Lösung (1 l) die von der Regeneration aus des Harzes aus C) gewonnen wurde und 7g/l Lithium enthielt wurde mittels Zugabe von NaOH auf pH = 10 eingestellt. Danach wurde 0,3 L 18 g einer 400 g/l Lösung Na₂CO₃ bei 90 °C zugegeben und das Li₂CO₃ viel als weißer Feststoff aus. Das Gemisch wurde bei 2 bar filtriert und es wurden 32.5g an Li₂CO₃ mit einer Reinheit von 99.5 % gewonnen. Dies entspricht einer Ausbeute von 88 %.

### Beispiel 2

### A) Entfernung von Calciumionen, Magnesiumionen und Strontiumionen durch Fällung

Zu 1 l Sole (37g/l Ca²⁺, 3,7g/l Mg²⁺, 2,3 g/l Sr²⁺, 65 g/l Na⁺ und 140 ppm Li⁺ (0,014 g/l) wurde 0,32 mL einer Lösung aus Na₂CO₂ (400g/l, 129,3g) und 0,05 L NaOH (1000g/l, 48.8 g) über einen Zeitraum von 30 min bei 60 °C hinzugegeben. Die Sole und das Fällungsmittel wurde dabei bei einer Rührrate von 350 rpm vermischt. Die entstehende Dispersion wurde über einen Filtertrichter bei einem Druck von 2 bar abfiltriert. Die gereinigte Sole enthielt Ca²⁺, Sr²⁺ und Mg²⁺ in einer Konzentration unter 20 ppm und weiterhin 140 ppm Li⁺ und hatte einen pH Wert von 11.

### B) Entfernung von Ca²⁺, Sr²⁺ und Mg²⁺ mittels eines iminodiessigsäuregruppenhaltigen Chelatharzes

Ein Messzylinder wurde mit 50 ml eines makroporösen, monodispersen Chelatharz enthaltend funktionelle Gruppen des Strukturelements (I) wobei R₁ und R₂ unabhängig voneinander = -CH₂COOX oder H sind, aber R₁ und R₂ nicht gleichzeitig für Wasserstoff stehen können und X für Wasserstoff steht, gefüllt. Das Perlpolymerisates des Chelatharz hat einen Durchmesser von 430 µm. Der durchschnittliche Substitutionsgrad des hier eingesetzten Chelatharzes enthaltend funktionelle Gruppen des Strukturelements (I) beträgt 1,6. Das Harz hat eine totale Kapazität von 2,8 mol/L. Das Harz wurde dann in eine 100 ml Chromatographiesäule mit einem Durchmesser von 3 cm umgefüllt, wobei darauf geachtet wurde, dass sich zwischen den Polymerkügelchen keine Luftblasen befanden. 267 I der aufgereinigten Salzsole aus A) wurde mit eine Pumprate von 1000 ml/h auf die Chromatographiesäule gepumpt. Dabei wurde das Harz mit 42 g Ca²⁺, Sr²⁺ Mg²⁺ pro Liter Harz beladen. Nach 52 h wurde der Durchbruch erreicht und die erhaltenen Salzsole enthielt Ca²⁺, Sr²⁺ und Mg²⁺ in einer Konzentration unter 20 ppb und die Konzentration der Li⁺ betrug weiterhin 140 ppm. Nachdem die Salzsole durch Spülung mit 4 BV (Bettvolumen) (1 BV= 50 mL Harz) demineralisiertem Wasser von der Säule entfernt wurde, wurde das Harz mit 2 BV 7.5% HCl, 4BV/h regeneriert. Danach wurde das Harz erneut mit 4 BV (1 BV= 50 mL Harz) demineralisiertem Wasser gewaschen und mit 2 BV 4% NaOH, 4 BV/h in die Natriumform überführt.

### C) Lithiumadsorption und -konzentration an dem iminodiessigsäuregruppenhaltigen Chelatharzes

Ein Messzylinder wurde mit 50 ml eines makroporösen, monodispersen Chelatharz enthaltend funktionelle Gruppen des Strukturelements (I) wobei R₁ und R₂ unabhängig voneinander = -CH₂COOX oder H sind, aber R₁ und R₂ nicht gleichzeitig für Wasserstoff stehen können und X für Wasserstoff steht, gefüllt. Das Perlpolymerisates des Chelatharz hatte einen Durchmesser von 430 µm. Der durchschnittliche Substitutionsgrad des hier eingesetzten Chelatharzes enthaltend funktionelle Gruppen des Strukturelements (I) beträgt 1,6. Das Harz hat eine totale Kapazität von 2,8 mol/L. Das Harz wurde dann in eine 100 ml Chromatographiesäule mit einem Durchmesser von 3 cm umgefüllt, wobei darauf geachtet wurde, dass sich zwischen den Polymerkügelchen keine Luftblasen befanden.

9,2 l der aus B) gereinigten Salzsole wurde mit einer konstanten Flußrate von 250 ml/h auf das Harz gepumpt. Das Harz wurde mit 1.75 g Lithium pro Liter Harz beladen und weist damit eine nutzbare Kapazität von 1,75 g/l auf. Damit wurde 9 % der totalen Kapazität mit Lithium belegt. Nach 4 h war der Durchbruch erreicht. Nachdem die Salzsole durch Druckluft von der Säule entfernt wurde, wurde das Harz mit 1 BV 7.5% HCl, 4BV/h regeneriert. Das Eluat wurde mit Natriumhydroxid auf einen pH 10,5 eingestellt und wieder auf die Säule aufgetragen. Dieses Verfahren wurde 5 mal wiederholt, wobei 50 % - 96 % der totalen Kapazität mit Lithium belegt wurde. Hierbei wurde eine Lösung mit 7 g/l Lithium erhalten woraus Lithiumchlorid gewonnen wurde.

### D) Gewinnung von Lithiumcarbonat durch Fällung

Der pH der Lösung (1 I) die von der Regeneration aus des Harzes aus C) gewonnen wurde und 7g/l Lithium enthielt wurde mittels Zugabe von NaOH auf pH = 10 eingestellt. Danach wurde 0,3 L 18 g einer 400 g/l Lösung Na₂CO₃ bei 90 °C zugegeben und das Li₂CO₃ viel als weißer Feststoff aus. Das Gemisch wurde bei 2 bar filtriert und es wurden 32.5g an Li₂CO₃ mit einer Reinheit von 99.5 % gewonnen. Dies entspricht einer Ausbeute von 88 %.

## Patentansprüche

1. Verfahren zur Herstellung von Lithiumcarbonat, **dadurch gekennzeichnet, dass**
in einem ersten Verfahrensschritt a.) aus einer Sole enthaltend mindestens Lithiumionen, Calcium- und Magnesiumionen, die Calcium- und Magnesiumionen durch Zugabe eines Fällungsmittels ausgefällt werden und dabei ein Überstand generiert wird und dann
in einem Verfahrensschritt b.) der Überstand aus a.) mit mindestens einem Chelatharz enthaltend funktionelle Gruppen des Strukturelements (I) 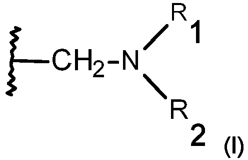
worin 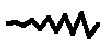 für das Polystyrolcopolymergerüst steht und R₁ und R₂ unabhängig voneinander für -CH₂COOX, -CH₂PO(OX¹)₂, -CH₂PO(OH)OX², -(CS)NH₂-CH₂-Pyridyl oder Wasserstoff stehen, wobei R₁ und R₂ nicht beide gleichzeitig Wasserstoff sein können und X, X¹ und X² unabhängig voneinander für Wasserstoff, Natrium oder Kalium stehen, in Kontakt gebracht wird und
in einem Verfahrensschritt c.) der Durchlauf aus Verfahrensschritt b.) enthaltend Lithium in einer Gewichtskonzentration von 1 ppm bis 500 ppm.
mit mindestens einem Chelatharz enthaltend funktionelle Gruppen des Strukturelements (I) und einer totalen Kapazität von 2.0 mol/L bis 3.5 mol/L 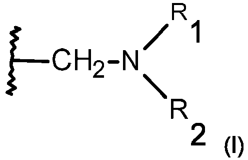
worin 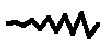 und R₁ und R₂ die in Verfahrensschritt b.) genannte Bedeutung haben in Kontakt gebracht wird und 30 % bis 96 % der totalen Kapazität des makroporösen, monodispersen Chelatharz enthaltend funktionelle Gruppen des Strukturelements (I) mit Lithium beladen werden und
in einem Verfahrensschritt d.) das in Verfahrensschritt c.) auf dem Chelatharz enthaltend funktionelle Gruppen des Strukturelements (I) adsorbierte Lithium durch Zugabe von anorganischen Säuren eluiert wird und gegebenenfalls das Eluat auf einen pH > 7 eingestellt und gegebenenfalls wieder in Verfahrensschritt c.) zurückgeführt wird und
in einem Verfahrensschritt e.) das lithiumhaltige Eluat aus Verfahrensschritt d.) mit mindestens einem Carbonat oder mit Kohlendioxid oder dessen Säure versetzt wird.

2. Verfahren nach Anspruch 1, **dadurch gekennzeichnet, dass** Natriumcarbonat, Natriumhydroxid oder Gemische dieser Verbindungen in Verfahrensschritt a.) als Fällungsmittel eingesetzt werden.

3. Verfahren nach einem der Ansprüche 1 oder 2, **dadurch gekennzeichnet, dass** das molare Verhältnis Fällungsmittel zu Calcium- und Magnesiumionen in Verfahrensschritt a.) 3:1 bis 1:1 beträgt.

4. Verfahren nach Anspruch 3, **dadurch gekennzeichnet, dass** in Verfahrensschritt a) ein basisches Fällungsmittel eingesetzt wird oder dem Fällungsmittel eine Base zugesetzt wird und dadurch der Überstand aus dem Verfahrensschritt a.), der in Verfahrensschritt b.) eingesetzt wird, einen pH Wert von 10 bis 12 besitzt.

5. Verfahren nach mindestens einem der Ansprüche 1 bis 4, **dadurch gekennzeichnet, dass** R₁ und R₂ in dem in Verfahrensschritt b.) und/oder dem in Verfahrensschritt c.) eingesetztem Chelatharz enthaltend funktionelle Gruppen des Strukturelements (I) unabhängig voneinander = -CH₂PO(OX¹)₂, -CH₂PO(OH)OX², CH₂COOX oder Wasserstoff, wobei R₁ und R₂ nicht beide gleichzeitig Wasserstoff sein können und X, X¹ und X² stehen unabhängig voneinander für Wasserstoff, Natrium oder Kalium.

6. Verfahren nach Anspruch 5, **dadurch gekennzeichnet, dass** R₁ und R₂ in dem in Verfahrensschritt b.) und/oder dem in Verfahrensschritt c.) eingesetztem Chelatharz enthaltend funktionelle Gruppen des Strukturelements (I) unabhängig voneinander = - CH₂PO(OX¹)₂, -CH₂PO(OH)OX² oder Wasserstoff, wobei R₁ und R₂ nicht beide gleichzeitig Wasserstoff sein können und X, X¹ und X² stehen unabhängig voneinander für Wasserstoff, Natrium oder Kalium.

7. Verfahren nach einem der Ansprüche 5 oder 6, **dadurch gekennzeichnet, dass** das Perlpolymerisat des Chelatharzes enthaltend funktionelle Gruppen des Strukturelements (I) monodispers, makroporös ist und das Perlpolymerisat einen Durchmesser von 250 µm bis 450 µm aufweist.

8. Verfahren nach Anspruch 7, **dadurch gekennzeichnet, dass** der Durchlauf aus Verfahrensschritt b), der in Verfahrensschritt c.) eingesetzt wird, einen pH-Wert von 10 bis 12 aufweist.

9. Verfahren nach mindestens einem der Ansprüche 1 bis 8, **dadurch gekennzeichnet**, das in Verfahrensschritt d.) Salzsäure als anorganische Säure zur Elution eingesetzt wird.

## Claims

1. Process for the preparation of lithium carbonate, **characterized in that**
in a first process step a.), the calcium and magnesium ions are precipitated from a brine containing at least lithium ions, calcium and magnesium ions by means of addition of a precipitant, generating a supernatant, and then
in a process step b.), the supernatant from a.) is contacted with at least one chelating resin containing functional groups of structural element (I) 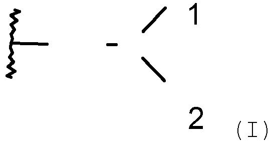
in which 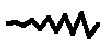 is the polystyrene copolymer skeleton and R₁ and R₂ independently of one another are -CH₂COOX, -CH₂PO(OX¹)₂, -CH₂PO(OH)OX², -(CS)NH₂, -CH₂-p yridyl or hydrogen, where R₁ and R₂ cannot both simultaneously be hydrogen and X, X¹ and X² independently of one another are hydrogen, sodium or potassium, and
in a process step c.), the mobile phase from process step b.) containing lithium in a concentration by weight of from 1 ppm to 500 ppm is contacted with at least one chelating resin containing functional groups of structural element (I) and a total capacity of from 2.0 mol/l to 3.5 mol/l 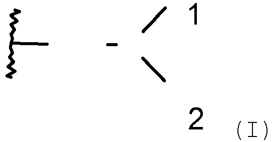
in which 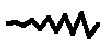 and R₁ and R₂ have the meanings given in process step b.), and 30% to 96% of the total capacity of the macroporous, monodisperse chelating resin containing functional groups of structural element (I) are loaded with lithium, and
in a process step d.), the lithium adsorbed on the chelating resin containing functional groups of structural element (I) in process step c.) is eluted by addition of inorganic acids and the eluate is optionally adjusted to a pH > 7 and optionally recycled back into process step c.) and
in a process step e.), the lithium-containing eluate from process step d.) is admixed with at least one carbonate or with carbon dioxide or the acid thereof.

2. Process according to Claim 1, **characterized in that** the precipitant used in process step a.) is sodium carbonate, sodium hydroxide or mixtures of these compounds.

3. Process according to either of Claims 1 and 2, **characterized in that** the molar ratio of precipitant to calcium and magnesium ions in process step a.) is 3:1 to 1:1.

4. Process according to Claim 3, **characterized in that** in process step a.) a basic precipitant is used or a base is added to the precipitant and as a result the supernatant from process step a.), which is used in process step b.), has a pH of 10 to 12.

5. Process according to at least one of Claims 1 to 4, **characterized in that** R₁ and R₂ in the chelating resin containing functional groups of structural element (I) used in process step b.) and/or the chelating resin containing functional groups of structural element (I) used in process step c.) independently of one another = -CH₂PO(OX¹)₂, -CH₂PO(OH)OX², CH₂COOX or hydrogen, where R₁ and R₂ cannot both simultaneously be hydrogen and X, X¹ and X² independently of one another are hydrogen, sodium or potassium.

6. Process according to Claim 5, **characterized in that** R₁ and R₂ in the chelating resin containing functional groups of structural element (I) used in process step b.) and/or the chelating resin containing functional groups of structural element (I) used in process step c.) independently of one another = -CH₂PO(OX¹)₂, -CH₂PO(OH)OX² or hydrogen, where R₁ and R₂ cannot both simultaneously be hydrogen and X, X¹ and X² independently of one another are hydrogen, sodium or potassium.

7. Process according to either of Claims 5 and 6, **characterized in that** the bead polymer of the chelating resin containing functional groups of structural element (I) is monodisperse and macroporous, and the bead polymer has a diameter of 250 µm to 450 µm.

8. Process according to Claim 7, **characterized in that** the mobile phase from process step b), which is used in process step c.), has a pH of 10 to 12.

9. Process according to at least one of Claims 1 to 8, **characterized in that** in process step d.) hydrochloric acid is used as inorganic acid for the elution.

## Revendications

1. Procédé pour la préparation de carbonate de lithium, **caractérisé en ce que**, dans une première étape de procédé a.), à partir d'un sol contenant au moins des ions de lithium, des ions de calcium et de magnésium, les ions de calcium et de magnésium sont séparés par précipitation par addition d'un agent de précipitation et un surnageant est ainsi généré et ensuite
dans une étape de procédé b.), le surnageant de a.) est mis en contact avec une résine de chélate contenant des groupes fonctionnels de l'élément structural (I) 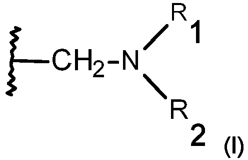
dans lequel 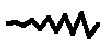 représente la structure de copolymère de polystyrène et R₁ et R₂ représentent, indépendamment l'un de l'autre, -CH₂COOX, -CH₂PO(OX¹)₂, -CH₂PO(OH)OX², - (CS)NH₂, -CH₂-pyridyle ou hydrogène, R₁ et R₂ ne pouvant pas représenter simultanément hydrogène et X, X¹ et X² représentant, indépendamment les uns des autres, hydrogène, sodium ou potassium et
dans une étape de procédé, c.), le produit qui passe de l'étape de procédé b.), contenant du lithium en une concentration pondérale de 1 ppm à 500 ppm,
est mis en contact avec au moins une résine de chélate contenant des groupes fonctionnels de l'élément structural (I) et présentant une capacité totale de 2,0 moles/l à 3,5 moles/l 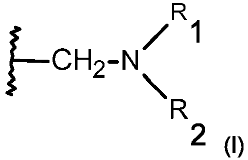
dans lequel 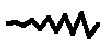 et R₁ et R₂ ont la signification mentionnée dans l'étape b.) et 30% à 96% de la capacité totale de la résine de chélate macroporeuse, monodispersée contenant des groupes fonctionnels de l'élément structural (I) sont chargés de lithium et
dans une étape de procédé d.), le lithium adsorbé dans l'étape de procédé c.) sur la résine de chélate contenant des groupes fonctionnels de l'élément structural (I) est élué par addition d'acides inorganiques et, le cas échéant, l'éluat est réglé à un pH > 7 et le cas échéant de nouveau recyclé dans l'étape de procédé c.) et,
dans une étape de procédé e.), l'éluat contenant du lithium de l'étape de procédé d.) est additionné d'au moins un carbonate ou de dioxyde de carbone ou de son acide.

2. Procédé selon la revendication 1, **caractérisé en ce que** du carbonate de sodium, de l'hydroxyde de sodium ou des mélanges de ces composés sont utilisés dans l'étape de procédé a.) comme agent de précipitation.

3. Procédé selon l'une quelconque des revendications 1 ou 2, **caractérisé en ce que** le rapport molaire d'agent de précipitation à ions de calcium et de magnésium dans l'étape de procédé a.) est de 3:1 à 1:1.

4. Procédé selon la revendication 3, **caractérisé en ce que**, dans l'étape de procédé a.), un agent de précipitation basique est utilisé ou l'agent de précipitation est additionné d'une base et, de ce fait, le surnageant de l'étape de procédé a.), qui est utilisé dans l'étape de procédé b.), possède un pH de 10 à 12.

5. Procédé selon au moins l'une quelconque des revendications 1 à 4, **caractérisé en ce que** R₁ et R₂ dans la résine de chélate utilisée dans l'étape de procédé b.) et/ou dans l'étape de procédé c.), contenant des groupes fonctionnels de l'élément structural, représentent, indépendamment l'un de l'autre -CH₂PO(OX¹)₂, - CH₂PO(OH)OX², -CH₂COOX ou hydrogène, R₁ et R₂ ne pouvant pas représenter simultanément hydrogène et X, X¹ et X² représentant, indépendamment les uns des autres, hydrogène, sodium ou potassium.

6. Procédé selon la revendication 5, **caractérisé en ce que** R₁ et R₂ dans la résine de chélate utilisée dans l'étape de procédé b.) et/ou dans l'étape de procédé c.), contenant des groupes fonctionnels de l'élément structural, représentent, indépendamment l'un de l'autre -CH₂PO(OX¹)₂, -CH₂PO(OH)OX² ou hydrogène, R₁ ou R₂ ne pouvant pas représenter simultanément hydrogène et X, X¹ et X² représentant, indépendamment les uns des autres, hydrogène, sodium ou potassium.

7. Procédé selon l'une quelconque des revendications 5 ou 6, **caractérisé en ce que** le polymère en perles de la résine de chélate contenant des groupes fonctionnels de l'élément structural (I) est monodispersé, macroporeux et le polymère en perles présente un diamètre de 250 µm à 450 µm.

8. Procédé selon la revendication 7, **caractérisé en ce que** le produit qui passe de l'étape de procédé b.), qui est utilisé dans l'étape de procédé c.), présente un pH de 10 à 12.

9. Procédé selon au moins l'une quelconque des revendications 1 à 8, **caractérisé en ce que**, dans l'étape de procédé d.), de l'acide chlorhydrique est utilisé en tant qu'acide inorganique pour l'élution.
